# EUROPEAN PATENT SPECIFICATION

(11) **EP 3 015 416 B1**
(45) Date of publication and mention of the grant of the patent: **28.12.2016**
(21) Application number: 14191292.3
(22) Date of filing: 31.10.2014
(51) Int. Cl.: B67C 3/00, B67C 3/22, F16J 15/46

(54) **Manifold for a filling unit for filling a plurality of articles with a pourable product**
Verteiler für eine Fülleinheit zum Befüllen von mehreren Artikeln mit einem fließfähigen Produkt
Collecteur destiné à une unité de remplissage pour remplir une pluralité d'articles avec un produit pouvant être versé

(43) Date of publication of application: 04.05.2016
(73) Proprietor: SIDEL PARTICIPATIONS S.A.S., 76930 Octeville-sur-Mer (FR)
(72) Inventor: Quagliarella, Pierluigi, 76930 Octeville-sur-Mer (IT)
(74) Representative: Siloret, Patrick

(56) References cited:
- EP-A1- 2 070 865
- DE-A1-102013 102 594
- DE-U1- 29 620 323

## Description

The present invention relates to a manifold according to the preamble of claim 1, for a filling unit for filling a plurality of articles with a pourable product, in particular containers filled with a food product.

A manifold according to the preamble of claim 1 is known from EP-A-2070865.

As is known, many pourable food product comprising not only food product like milk, fruit juice or beverages in general, but also detergents are sold in containers having different shape and dimension.

These containers are typically made within bottling lines, which comprise a plurality of units for carrying out respective operations on containers.

Very briefly, the bottling line comprises at least a rinsing unit for rinsing containers, a filling unit for filling containers with a pourable food product, a capping unit for capping the containers and a grouping unit for forming groups of containers.

The known filling unit substantially comprises:
- a carousel rotating about a rotation axis;
- a tank containing the pourable food product and which rotates together with the carousel about the rotation axis; and
- a plurality of control valves, which are fluidly connected with the tank and are supported by the carousel in a radially external position with respect to the rotation axis of the carousel.

The known filling unit further comprises a tube, which is adapted to replenish the tank with the pourable food product.

In particular, the tube is stationary with respect to the rotation axis and comprises:
- a first portion, which protrudes outside the tank and defines an inlet mouth of the tube; and
- a second portion, which is arranged inside the tank and defines an outlet mouth of the tube.

The inlet mouth and the outlet mouth extend on respective planes orthogonal to the rotation axis.

Furthermore, the outlet mouth opens inside the tank.

In use, the pourable product is fed inside the tube through the inlet mouth and flows inside the tank through the outlet mouth.

The first portion of the tube comprises a further inlet mouth, which lies on a plane orthogonal to the rotation axis.

The second portion of the tube comprises a plurality of spherical elements provided with a plurality of holes, which protrude radially with respect to the rotation axis and extend inside the tank.

In order to sterilize the tube and the tank, a sterilizing agent is fed inside the further inlet mouth, flows along the tube and sprays inside the tube by means of the spherical elements.

The known filling device also comprises a manifold which is fitted around the tube.

In greater detail, the manifold comprises:
- a stationary flange, which is fixed to the tube and defines a duct; and
- a rotary flange, which is fixed to the tank.

The stationary flange and the rotary flange define together with the tube a radial passage, which extends between the duct and the tank.

An inert agent, especially nitrogen, is conveyed from the outer environment inside the tank, through the fluidic line formed by the duct and the radial passage.

The manifold defines an annular channel which is filled with vapour of waters or condensed water, so as to establish a fluidic barrier between the non-sterile outer environment and the sterile inner volume of the tank. In this way, the contaminant agents are prevented from reaching the inner volume of the tank and, therefore, the pourable food product.

In greater detail, the annular channel is bounded between the first flange and the second flange.

The manifold also comprises a sealing element in order to prevent any leakage from the annular channel towards the tank.

In greater detail, the known sealing element comprise:
- a rotating shoe, which is fixed to the rotary flange; and
- a plurality of springs, which exert an axial load on the rotating shoe, so as to ensure the tight-fluid sealing of the annular channel.

In particular, the shoe is generally made in teflon, which is glued to the rotary flange.

Due to the above configuration, as the shoe wears out, the compression action exerted by the springs decreases.

A need is felt within the sector to render as uniform as possible, the compression load exerted on the shoe.

Furthermore, the gluing of shoe to the rotary flange generates, on one hand, a need for very narrow planarity tolerance for ensuring the tight-fluid effect.

On the other hand, the gluing of the shoe in teflon is a complex operation, and the glues which can resist to high temperature are not compatible with the food products.

A need is felt within the sector to obtain a manifold which can use shoe with larger planarity tolerance and/or which are suitable for food product even at very high temperatures.

EP-A-2070865, DE-A-102013102594 and DE-U-29620323 disclose a manifold for a filling unit.

It is an object of the present invention to provide a manifold for filling unit for filling a plurality of articles with a pourable product, which meets at least one of the above requirements.

The aforementioned object is achieved by the present invention as it relates to a manifold for filling unit for filling a plurality of articles with a pourable product, as claimed in claim 1.

One preferred embodiments is hereinafter disclosed for a better understanding of the present invention, by way of non-limitative example and with reference to the accompanying drawings, in which:
- Figure 1 is a perspective enlarged view of a filling unit into which a manifold according to the present invention is incorporated, with parts removed for clarity;
- Figure 2 is a perspective view of some components of the manifold of Figure 1;
- Figure 3 is a top view of the manifold of Figures 1 and 2, with parts removed for clarity;
- Figure 4 is a section along line IV-IV of Figure 3;
- Figure 5 is a section along line V-V of Figure 3;
- Figure 6 is a section along line VI-VI of Figure 3;
- Figure 7 is a section along line VII-VII of Figure 3; and
- Figure 8 is an enlarged view of some components of Figure 4.

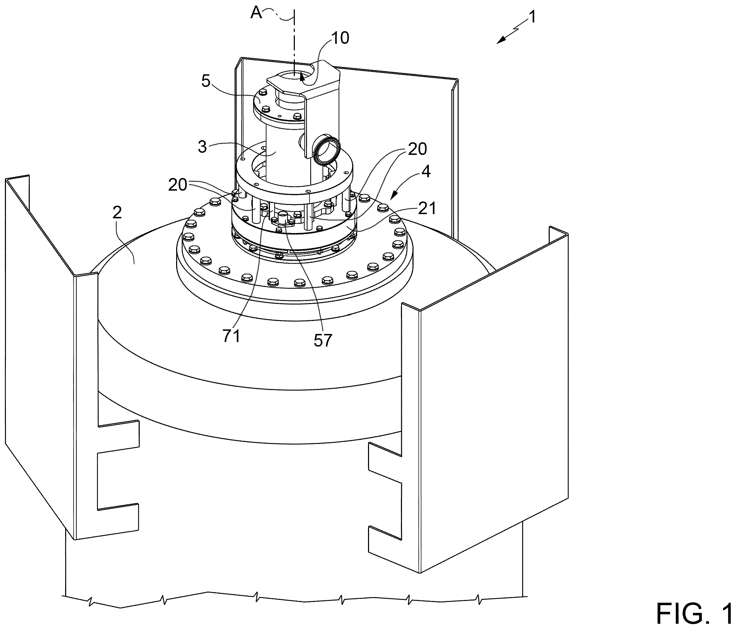

With reference to Figure 1, numeral 1 indicates a filling unit for filling articles (not-shown) with a pourable product, especially a food product.

Filling unit 1 substantially comprises:
- a tank 2, which can rotate about an axis A, vertical in the embodiment shown;
- a carousel (not-shown), which is angularly integral with tank 2 and comprises a plurality of filling valves, which are fluidly connected with tank 2 and are supported by the carousel in a radially external position with respect to axis A.

In greater detail, the filling valves may be selectively arranged in a known way either in an open position, in which they fill respective articles, or in a closed position, in which they are prevented from filling the respective articles.

Filling unit 1 further comprises:
- a tube 3 for replenishing the tank 2 with the pourable food product; and
- a manifold 4, which is mounted around tube 3.

Tube 3 is stationary with respect to axis A.

Both tube 3 and manifold 4 are symmetrical about axis A.

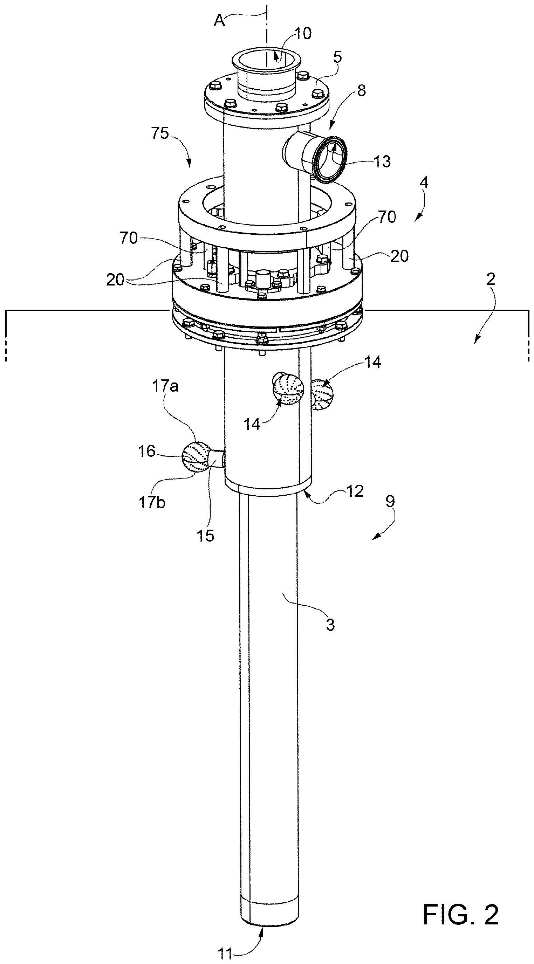

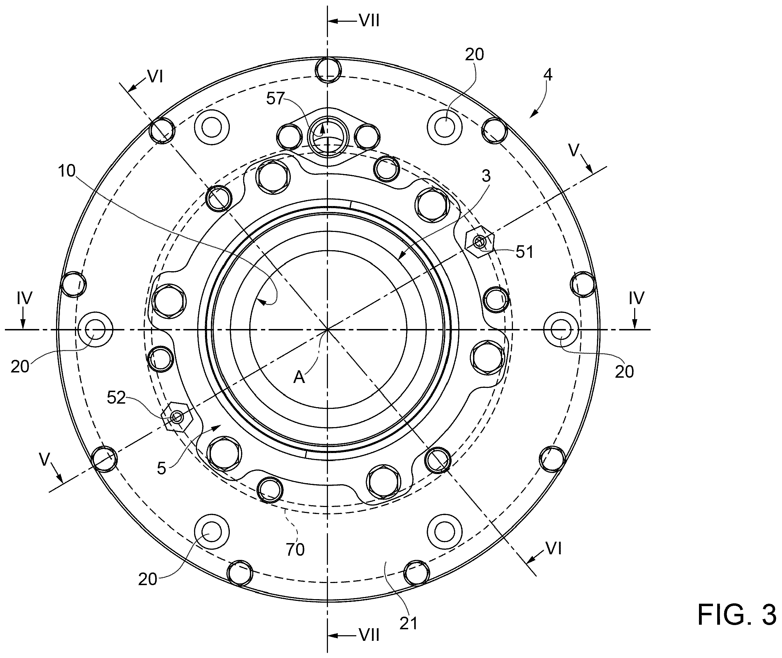

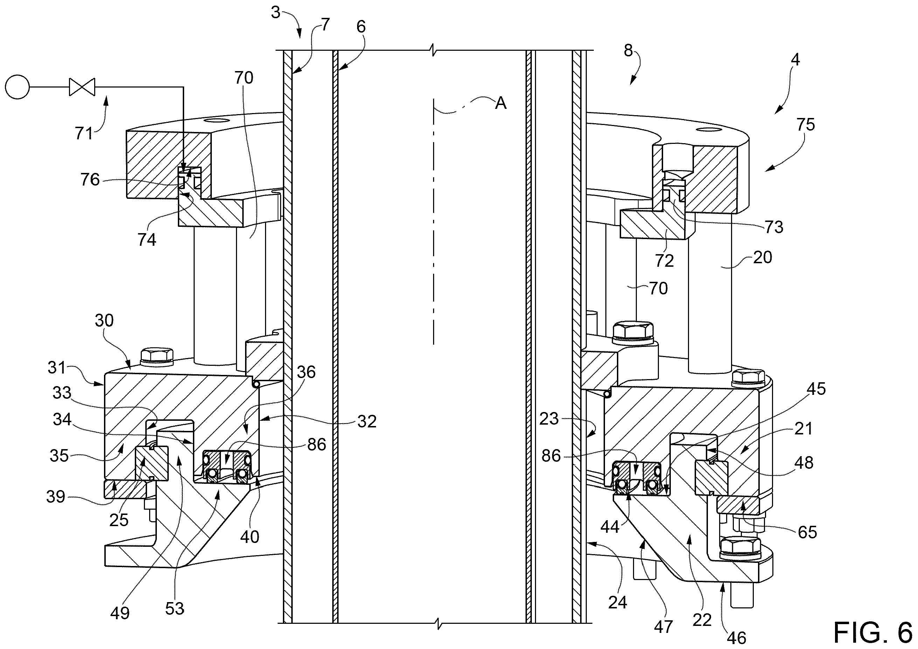

Tube 3 comprises, in turn, (Figures 2 to 8):
- a flange 5, which is fixed to a stationary part of filling unit 1;
- a duct 6; and
- a duct 7, which is radially outer with respect to duct 6, surrounds duct 6 and is fluidly insulated from duct 6.

Furthermore, tube 3 comprises:
- a portion 8 which protrudes, upwardly in the embodiment shown, from tube 3; and
- a portion 9 which extends inside tube 3.

Tube 3 further comprises:
- an inlet mouth 10, which is defined by portion 8 and is adapted to be fed with the pourable product to be conveyed inside tank 2; and
- an outlet mouth 11, which is axially opposite to mouth 10, is defined by portion 9 and is adapted to feed tank 2 with the pourable product.

Mouth 10 and mouth 11 are axially opposite with respect to one another.

Duct 6 extends between mouths 10 and 11. More precisely, mouth 10 and mouth 11 extend about axis A and define axially opposite ends of duct 6.

Duct 7 is axially bounded between flange 5 and a wall 12.

Wall 12 lies on a plane orthogonal to axis A, is closed and axially interposed along axis A between flange 5 and mouth 11.

Duct 7 further comprises (Figure 2), proceeding along axis A from flange 5 towards wall 12:
- a mouth 13, which is defined by portion 8; and
- a plurality of spraying devices 14, which radially protrude from portion 9 externally to duct 7 and inside the inner volume of tank 2.

Mouth 13 extends about an its own axis, which is, in the embodiment shown, orthogonal to axis A.

Each spraying device 14 substantially comprises:
- a duct 15, which extends radially with respect to axis A and opens inside duct 7; and
- a hollow body 16, which is fluidly connected to body 15 and comprises on its own surface 17a a plurality of openings 17b.

Body 16 is, in the embodiment shown, spherical. Mouth 13 is adapted to be feed:
- either with a sterilizing agent during a sterilizing step of the tank 2; or
- with an inert agent, e.g. nitrogen or sterile area, during a normal operation of tank 2, so as to create a layer of the inert agent above the layer of the pourable product inside tank 2 and to correspondingly pressurize tank 2.

Spraying devices 14 receive the sterilizing agent or the inert agent from duct 7 and spray it inside tank 2, thus either cleaning tank 2 during a sterilizing step or maintaining a given pressure inside tank 2 during an operative step.

Manifold 4 surrounds portion 8 of tube 3 in a position, which is arranged on the opposite axial side of mouth 13 with respect to flange 5.

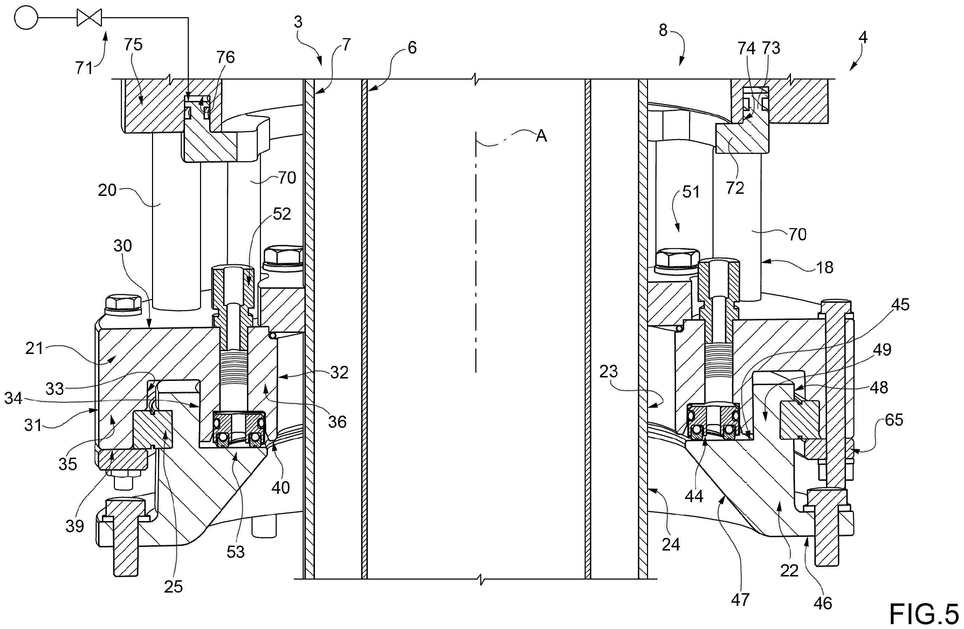

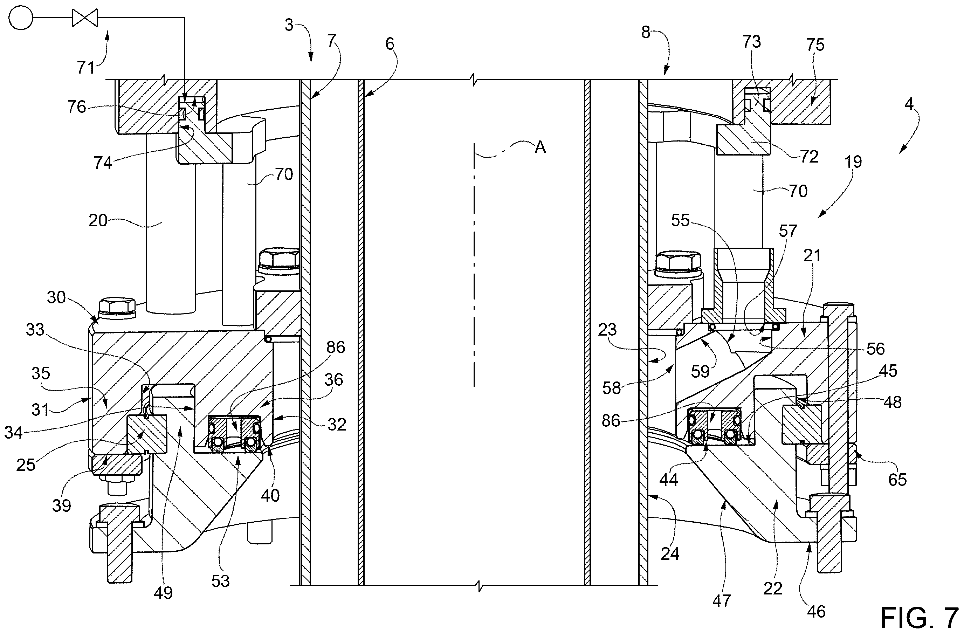

Manifold 4 defines:
- a fluidic line 18 (Figures 5 to 8), which is adapted to be filled with vapours of water or condensed water, so as to establish a fluid barrier between the outer environment and tank 2; and
- a fluidic line 19 (Figure 7), which is fluidly connected with tank 2, in order to convey inside tank 2 either the sterilizing agent during a sterilizing step or the inert agent inside tank 2.

Manifold 4 further comprises (Figures 2 to 8):
- a stationary flange 75, which is connected to flange 5 and is stationary with respect to axis A;
- a stationary flange 21, which is fixedly connected to flange 75 by a plurality of columns 20, which are angularly equi-spaced about axis A and axially fixed with respect to axis A;
- a rotary flange 22, which is connected to tank 2 and, therefore, rotates in use about axis A; and
- a bearing 25, which is interposed between flanges 21, 22 and rotatably supports flange 22 with respect to flange 21 about axis A.

Flange 5 is axially arranged on the side of mouth 13 with respect to flange 75.

Flange 21 is axially interposed between flanges 75, 22.

Flange 21 is spaced by a radial passage 23 from duct 7 of tube 3.

In the embodiment shown, passage 23 is substantially cylindrical and has a constant width radially with respect to axis A.

Flange 22 is spaced by a radial passage 24 from duct 7 of tube 3.

In the embodiment shown, passage 24 is shaped as a truncated cone and has an increasing width radially with respect to axis A, proceeding from flange 21 on the opposite side of flange 5.

Flange 21 comprises:
- an axial end surface 30, which is arranged on the side of mouth 10 and lies on a plane orthogonal to axis A;
- a radially external surface 31, which protrudes from surface 30 towards flange 22; and
- a radially internal surface 32, which protrudes from surface 30 towards flange 22.

Furthermore, flange 21 comprises:
- a leg 35, which axially extends from surface 30 towards flange 21 and which is bounded between surface 31 and a surface 33; and
- a leg 36, which axially extends from surface 30 towards flange 22 and which is bounded between a surface 34 and surface 32.

Legs 35, 36 comprise respective axial ends 39, 40, which are arranged on the axial side of flange 21.

Leg 36 is radially internal with respect to leg 35.

In greater detail, surface 33 is radially external with respect to surface 34 and radially internal with respect to surface 31.

Surface 34 is radially interposed between surfaces 32, 33.

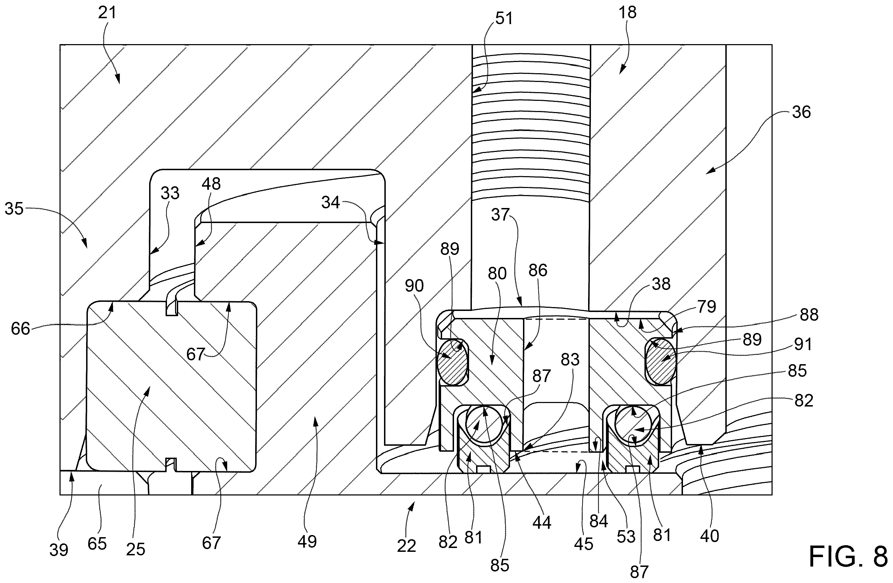

Flange 21 further comprises an annular groove 37, which is open on the opposite side of surface 30 (Figure 8) .

Groove 37 is radially interposed between surfaces 32, 34 and is axially bounded by an annular surface 38 on the side of surface 30.

Surface 38 is axially spaced from surface 30 and from axial ends 39, 40 of legs 35, 36 opposite to flange 21.

In detail, surface 38 is axially interposed between axial ends 39, 40 and surface 30.

Flange 22 comprises, in turn,:
- an axial end surface 45, which is arranged on the axial side of flange 21;
- an axial end surface 46, which is opposite to surface 45; and
- a radially internal surface 47, which extends between surfaces 45, 46 and is shaped as a cone-truncated surface having increasing width proceeding from surface 45 towards surface 46.

Surfaces 45, 46 lie on respective planes, which are substantially orthogonal with respect to axis A.

Flange 22 further comprises an annular appendix 49, which protrudes from surface 45 towards flange 21 and engages groove 37 with axial play.

Appendix 49 is axially spaced from surface 38, and is radially spaced from surface 33 of leg 35 and from surface 34 of leg 36.

Flange 22 finally comprises a radially external surface 48, which is opposite to surface 47 and bounds appendix 49 in a radially external position with respect to axis A.

Surface 45 is spaced from end 40 of leg 36 by an axial gap. That axial gap is bounded, on its radially external side, by appendix 49 and opens, on its radially internal side, in the interface between passages 23, 24.

Manifold 4 further comprises a shoe 53, which engages in part a groove 50 defined by end 40 and is shaped as a disk.

Fluidic line 19 comprises (Figure 7):
- an inlet conduit 55, which extends through flange 21 and is connected to a source of either the sterilizing agent or the inert agent; and
- passages 23, 24.

Conduit 55 comprises, in turn,:
- an axial portion 56, which defines an opening 57 in surface 30; and
- a portion 59, which is inclined with respect to axis A and extends between portion 56 and an opening 58 of surface 32.

Opening 58 opens inside passage 23.

Advantageously, manifold 4 comprises a plurality of pistons 70 movable along axis A and operatively connected to shoe 53 and a pneumatic circuit 71 which can be controlled to exert a pressure on a fluid acing on pistons 70, so as to press pistons 70 against shoe 53 parallel to axis A.

Preferably, the pressure of the fluid is kept constant by pneumatic circuit 71.

In greater detail, manifold 4 comprises an annular chamber 76 axially bounded between flanges 75, 5, filled with the fluid, and operatively connected with pneumatic circuit 71.

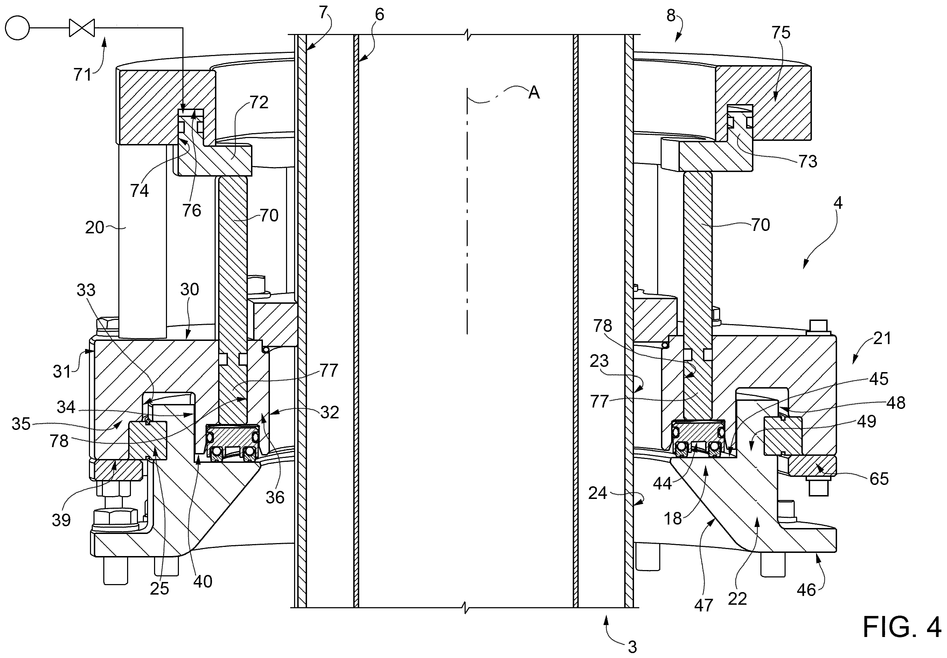

Flange 75 comprises, in turn, (Figures 4, 6 and 7):
- a disk 72 from which pistons 70 extend towards shoe 53; and
- an appendix 73, which protrudes from disk 72 towards flange 75 and is housed inside a groove 74 of flange 75.

Appendix 73 has a width smaller than the width of disk 72 in a radial direction with respect to axis A.

In particular, pistons 70 axially protrude from disk 72 on the opposite axial side of flange 75.

Furthermore, pistons 70 comprise (Figure 4) respective portions 77, which extends with radial gap inside relative holes 78 defined by leg 36 of flange 21 and contact shoe 53.

Pistons 70 are angularly equi-spaced about axis A.

Pistons 70 are angularly spaced from conduit 55 and conduits 51, 52 from about axis A.

Pneumatic circuit 71 comprises, in the embodiment shown, a source of pressure, a control valve and a duct which extends between the source of pressure to chamber 76.

With reference to Figure 8, shoe 53 is stationary with respect to the rotation about axis A. In other words, shoe 53 is prevented from rotating about axis A.

Shoe 53 is axially interposed between leg 36 of flange 21 and surface 45 of flange 22.

In greater detail, shoe 53 comprises (Figure 8):
- an annulus 80, which is arranged on the side of flange 21 and contacts flange 21;
- a pair of annuluses 81, which are arranged on the side of flange 22 and with respect to which flange 22 rotary slides; and
- a pair of O-rings 82, which are made in elastomeric material and are axially interposed between annulus 80 and respective annuluses 81.

Annulus 80 is axially bounded between:
- a flat surface 79, which is on the opposite side of flange 22 and contacts pistons 70; and
- a surface 84, which is axially opposite to surface 79.

Surface 84 comprises:
- a portion 83, which is axially spaced from surface 45 of flange 21 by an annular gap 44; and
- a pair of seats 85 which are arranged on opposite lateral sides of portion 83 and are engaged by respective O-rings 82.

Gap 44 is radially bounded between annuluses 81 of shoe 53.

Annulus 80 comprises a pair of through first holes 86, which extend axially between gap 44 and respective conduits 51 and 52 and are angularly arranged in correspondence of conduits 51, 52.

Annulus 80 further comprises a plurality of further second through holes 86 (not-shown in the Figures), which extend axially and are angularly spaced from conduits 51, 52.

Second holes 86 open inside gap 44.

Conversely, annulus 80 is a full body in the regions, which are angularly interposed between holes 86.

Annulus 80 further comprises a lateral surface 88, which is axially interposed between surfaces 79, 84 and define, on radially internal and radially external surface thereof, respective seats 89.

Annulus 80 is furthermore fitted inside an annular shoulder defined by groove 50 of leg 36.

Annulus 80 is preferably made in steel.

Radially inner annulus 81 tight-fluidly isolates gap 44 from passages 23, 24 and, therefore, from tank 2.

Annuluses 81 have each a width lower than the width of annulus 80, when measured radially with respect to axis A.

Annuluses 81 are contained within the width of respective seats 85 annulus 80, in a radial direction with respect to axis A.

Each annulus 81 is bounded, on the opposite side to flange 21, by a curved surface 87. Surface 87 is concave and defines a cavity on the side of annulus 80.

Annuluses 81 are preferably made in anti-wear material, PTFE in the embodiment shown.

Manifold 4 further comprises a pair of O-rings 90, 91.

O-ring 90 is arranged between radially internal seat 89 and end 40 of leg 36. O-ring 91 is arranged between radially external seat 89 and end 40 of leg 36.

O-ring 90 is therefore radially internal with respect to O-ring 91.

Fluidic line 18 comprises (Figure 4):
- an inlet conduit 51, which extends axially through leg 36, is fluidly connected to gap 44 and is connected to a source of the water vapour or the condensed water;
- first and second holes 86;
- gap 44; and
- an outlet conduit 52, which extends axially through leg 35, is fluidly connected to gap 44 and is connected to a discharge for the water vapour or the condensed water.

Conduits 51, 52 are angularly spaced from one another. In the embodiment shown, conduits 51, 52 are spaced by an angle of 180 degrees.

Advantageously, manifold 4 comprise only one bearing 25.

Bearing 25 is arranged on the radial side opposite to shoe 53 with respect to the passages 23, 24.

In greater detail, bearing 25 is radially external with respect to shoe 53 and passages 23, 24, with reference to axis A.

In greater detail, bearing 25 is radially interposed between leg 35 of flange 21 and appendix 49 of flange 22.

Furthermore, bearing 25 is axially clamped between leg 35 of flange 21 and a disk 65, which is fixed to flange 21 on the opposite axial side with respect to flange 75.

Bearing 25 is also axially clamped within appendix 49 of flange 22 on the opposite radial side with respect to leg 36.

In particular, bearing 25 is axially clamped between a shoulder 66 of leg 35 and disk 65. Bearing is also axially clamped between a pair of axially spaced shoulders 67 of appendix 49 (Figure 8).

More precisely, bearing 25 comprises a plurality of rolling bodies, which are conical and have four contact points.

Rolling bodies are arranged as an "O" and are opposite to one another.

Bearing 25 is capable of transmitting loads parallel to axis A, loads radial to axis A and torque between flanges 21, 22.

During the normal operation of filling unit 1, carousel, tank 2 and flange 22 rotate about axis A, and filling valves are switched between:
- the respective open positions, in which they fill relative containers with the pourable product; or
- the respective closed positions, in which they are prevented from filling the relative containers with the pourable product.

Furthermore, flanges 5, 75, 21 and tube 3 are stationary with respect to axis A.

Tube 3 replenishes tank 2 with the pourable product and creates a layer of the inert agent over inside tank 2 and above the pourable product, so as to keep the pourable product inside tank 2 at a given level of pressure.

In greater detail, the pourable food product enters mouth 10 of tube 3, flows through duct 6 of tube 3 and flows inside tank 2 by means of mouth 11 of tube 3.

With reference to a normal operation of filling unit 1, the inert agent is pumped inside mouth 13 of duct 7, flows along duct 7, reaches spraying devices 14 and is sprayed inside tank 2 by spraying device 14.

During the normal operation of filling unit 1, manifold 4 is configured for:
- allowing the inert agent to reach tank 2 also by means of fluidic line 19; and
- creating a fluidic barrier of vapours of water or of condensed water between tank 2 and the outer environment by means of fluidic line 18, so as to avoid any contamination of the pourable product inside tank 2 from the outer environment towards tank 2 and through gap 44 and passages 23, 24.

In particular, the inert agent is also pumped inside opening 57 of flange 21, flows through conduit 55 and reaches opening 58 of flange 21. Then, the inert agent reaches passages 23, 24 and tank 2.

The vapours of water or the condensed water enters conduit 51, fills gap 44 and holes 86 and exits from conduit 52.

In particular, gap 44 is axially bounded between surface 84 of annulus 80 and surface 45 of flange 21, and is radially bounded between annuluses 81 of shoe 53.

Shoe 53 ensures a tight-fluid sealing between stationary flange 21 and rotary flange 22, so as to avoid that the vapours of water or the condensed water flows from gap 44 inside passages 24 and therefore, inside tank 2.

Still more precisely, O-rings 82 tight-fluidly seal gap 44 from passages 23, 24 and, therefore, from tank 2.

Shoe 53 is stationary about axis A. In other words, shoe 53 does not rotate about axis A.

O-rings 92 are effective in elastically connecting annulus 80 with flange 21, which is, in turn, stationary about axis A.

In this way, O-rings 92 prevent that flange 22 could drive in rotation about axis A annuluses 81 and annulus 80.

Pneumatic circuit 71 keeps constant the pressure inside chamber 76, thus axially thrusting pistons 70 against shoe 53.

In this way, it is possible to maintain a constant axial action on shoe 53 even when the latter wears out, by simply keeping constant the pressure inside chamber 76.

Flange 22 is rotatably supported about axis A and with respect to flange 21 by only one bearing 25.

Bearing 25 is capable of transmitting loads parallel to axis A, loads radial to axis A and torque between flanges 21, 22.

During a sterilizing step of filling unit 1, a sterilizing agent is pumped instead of the inert agent inside mouth 13 of duct 7 and/or opening 57 of flange 21.

From an analysis of the features of manifold 4 made according to the present invention, the advantages it allows to obtain are apparent.

In particular, manifold 4 comprises a plurality of pistons 70, which are operated by pneumatic circuit 71 and are operatively connected with shoe 53.

Therefore, as annuluses 81 wear out, it is possible to keep constant the compression load downwardly exerted by pistons 70 on shoe 53, by simply keeping constant the pressure inside chamber 76.

In other words, as annuluses 81 wear out, stationary shoe 53 and rotary flange 22 are kept in contact under a uniform compression load.

Furthermore, annuluses 81 are not glued to flange 22 and are, in the embodiment shown, made in PTFE. Therefore, there is no need for very complex gluing operations of the annuluses 81 onto flange 22 and annuluses 81 are effective in ensuring the tight-fluid sealing effect also at high temperatures, contrary to the known solutions described in the introductory part of the present description.

O-rings 92 are effective in elastically connecting annulus 80 with flange 21, which is, in turn, stationary about axis A.

In this way, O-rings 92 prevent that flange 22 could drive in rotation about axis A annuluses 81 and annulus 80.

Furthermore, O-rings 92 compensate accidental planarity errors in the mounting of shoe 53 with respect to flanges 21, 22.

Therefore, there is no longer the need to manufacture annuluses 81 with a very narrow planarity tolerance.

Finally, flange 22 is rotatably supported with respect to flange 21 by only one bearing 25, thus reducing the overall cost and manufacturing complexity of manifold 4.

Bearing 25 is arranged on the opposite side of passages 23, 24, with respect to shoe 53. In greater detail, bearing 25 is radially external with respect to both shoe 53 and passages 23, 24.

Therefore, bearing 25 can be mounted from the radial outer side of manifold 4, with no risk of contaminating the pourable product with which tank 2 is filled.

Furthermore, bearing 25 can contrast loads directly radially with respect to axis A, axially with respect to axis A and torques having a main component parallel to axis A.

Finally, it is apparent that modifications and variants not departing from the scope of protection of the claims may be made to manifold 4.

In particular, the inert agent or the sterilizing agent could be conveyed through only one of fluidic line 9 or duct 7.

## Claims

1. A manifold (4) for a filling unit (1) for filling a plurality of articles with a pourable product, comprising:
- a first flange (21), which can be fixed to a tube (3) for filling a tank (2) with a pourable product;
- a second flange (22), which can rotate about an axis (A) with respect to said first flange (21), can be fixed to said tank (2), and defines a passage (23; 24) for a first fluid other than said pourable product and adapted to be conveyed, in use, inside said tank (2);
- a fluidic line (18), which is bounded between said first flange (21) and said second flange (22) and is adapted to be filled with a barrier second fluid in order to prevent contaminant agents from reaching said passage (23; 24); and
- a sealing element (53), which is interposed between said first flange (21) and second flange (22);
**characterized in that** said manifold (4) further comprises:
- at least one piston (70) which is movable parallel to said axis (A) and is operatively connected to said sealing element (53); and
- a pneumatic circuit (71), which is operable to exert a pressure on a third fluid acting, in use, on said piston (70), so as to press said piston (70) against said sealing element (53) along said axis (A).

2. The manifold of claim 1, **characterized by** comprising a third flange (75), which is fixed with to said first flange (21) at least with respect to said axis (A);
said pneumatic circuit (71) comprising, in turn, a chamber (76), which is interposed between said piston (70) and said third flange (75);
said pneumatic circuit (71) being controllable to exert said pressure on said third fluid inside said chamber (76).

3. The manifold of claim 1 or 2, **characterized in that** said sealing element (53) is stationary with respect to the rotation about said axis (A).

4. The manifold of claim 3, **characterized in that** said sealing element (53) comprises:
- a first portion (80), which contacts said at least piston (70); and
- a second portion (81), with respect to which said second flange (22) rotatably slides and which is axially interposed between said first portion (80) and said second flange (22);
said second portion (81) being preferably made in PTFE.

5. The manifold of claim 3 or 4, **characterized in that** said sealing element (53) comprises at least one first annular ring (82);
said first annular ring (82) being made in elastomeric material, being axially interposed between said first portion and said second portion (80, 81), and extending about said axis (A).

6. The manifold of claim 5, **characterized in that** said second portion (81) defines a seat (85), which is shaped as a circular arch in transversal section and houses, in part, said annular ring (82).

7. The manifold of any one of the foregoing claims, **characterized in that** said fluidic line (18) comprises a channel (44), which is radially bounded by said sealing element (53) and is axially bounded between said sealing element (53) and said second flange (21).

8. The manifold of claim 7, **characterized in that** said fluidic line (18) comprises:
- an inlet conduit (51), which is fluidly connected with said channel (44) and is adapted to allow said barrier fluid to enter said channel (44); and
- an outlet conduit (52), which is fluidly connected with said channel (44) and is adapted to allow said barrier fluid to move away from said channel (44);
said inlet conduit (51) and outlet conduit (52) being angularly spaced from each other;
said sealing element (53) being axially interposed between said channel (44) and said inlet conduit (51) and outlet conduit (52);
said sealing element (53) comprising:
- a first through hole (86), which extends parallel to said axis (A) between said inlet conduit (51) and said channel (44); and
- a second through hole (86), which extends parallel to said axis (A) between said outlet conduit (52) and said channel (44).

9. The manifold of any one of claims 6 to 8, **characterized in that** said sealing element (53) comprises two second portions (81);
said first portion (80) comprising, in turn,:
- a first annular surface (79), which contacts said piston (70); and
- a second annular surface (84), which is axially opposite to said first annular surface (79) and is axially separated by said channel (44);
said second annular surface (84) defining a pair of seats (85), which are arranged on opposite lateral sides of said channel (44) and house respective said second portions (81) and respective said annular rings (82);
said annular rings (82) radially bounding said channel (44).

10. The manifold of any one of the foregoing claims, **characterized in that** said first flange (21) defines a first leg (36), which has a main extension parallel to said axis (A);
said first leg (36) defining a groove (50) which partly houses said sealing element (53).

11. The manifold of claim 10, **characterized by** comprising a bearing (25) for rotatably supporting said first flange (21) and second flange (22) with respect to one another and about said axis (A);
said bearing (25) being radially interposed between a second leg (35) of said first flange (21) and an appendix (49) of said second flange (22);
said second leg (35) being radially outer with respect to said first leg (36) and having a main extension parallel to said axis (A);
said appendix (49) being radially interposed between said first leg (36) and said second leg (35);
said bearing (25) bearing arranged on the opposite radial side of said appendix (49) with respect to said sealing element (53).

12. The manifold of any one of the foregoing claims, **characterized by** comprising a bearing (25) for rotatably supporting said first flange (21) and said second flange (22) with respect one another and about said axis (A);
said sealing element (53) being radially interposed between said passage (23, 24) and said bearing (25);
said bearing (25) being arranged radially external with respect to said sealing element (53) and said passage (23, 24).

13. The manifold of any one of claims 5 to 12, **characterized by** comprising at least one second annular ring (90, 91), which is radially interposed between said first portion (80) and said first flange (21);
said second annular ring (90, 91) being made in elastomeric material.

14. The manifold of any one of the foregoing claims, **characterized in that** said first flange (21) defines a duct (55), which is fluidly connectable, in use, to a source of said first fluid and which is connectable to said passage (23, 24).

15. A filling unit (1) for filling a plurality of articles with a pourable filling product, especially a food product, comprising:
- a manifold (4) according to any one of the foregoing claims;
- a tube (3), which is stationary with respect to said axis (A); and
- a tank (2), which can be filled by said tube (3) with said pourable product;
said first flange (21) and said tube (3) defining a first part (23) of said passage (23, 24);
said second flange (22) and said tube (3) defining a second part (24) of said passage (23, 24).

## Patentansprüche

1. Verteiler (4) für eine Fülleinheit (1) zum Befüllen von mehreren Artikeln mit einem fließfähigen Produkt, umfassend:
- einen ersten Flansch (21), der an einem Schlauch (3) zum Befüllen eines Tanks (2) mit einem fließfähigen Produkt befestigt werden kann;
- einen zweiten Flansch (22), der um eine Achse (A) in Bezug auf den ersten Flansch (21) drehen kann, der an dem Tank (2) befestigt werden kann und einen Durchgang (23; 24) für ein erstes Fluid definiert, das anders als das fließfähige Produkt ist und bei Verwendung zum Befördern innerhalb des Tanks (2) ausgelegt ist;
- eine Fluidleitung (18), die zwischen dem ersten Flansch (21) und dem zweiten Flansch (22) begrenzt ist und zum Befüllen mit einem zweiten Sperrfluid ausgelegt ist, um zu verhindern, dass verunreinigende Mittel den Durchgang (23; 24) erreichen; und
- ein Dichtungselement (53), das zwischen dem ersten Flansch (21) und dem zweiten Flansch (22) angeordnet ist;
**dadurch gekennzeichnet, dass** der Verteiler (4) ferner umfasst:
- mindestens einen Kolben (70), der parallel zur Achse (A) beweglich ist und betriebswirksam mit dem Dichtungselement (53) verbunden ist; und
- eine pneumatische Schaltung (71), die zum Ausüben eines Drucks auf ein drittes Fluid betrieben wird, das bei der Verwendung auf den Kolben (70) einwirkt, um den Kolben (70) gegen das Dichtungselement (53) entlang der Achse (A) zu drücken.

2. Verteiler nach Anspruch 1, **dadurch gekennzeichnet, dass** er einen dritten Flansch (75) umfasst, der am ersten Flansch (21) zumindest in Bezug auf die Achse (A) befestigt ist;
wobei die pneumatische Schaltung (71) wiederum eine Kammer (76) umfasst, die zwischen dem Kolben (70) und dem dritten Flansch (75) angeordnet ist;
wobei die pneumatische Schaltung (71) gesteuert werden kann, um innerhalb der Kammer (76) Druck auf das dritte Fluid auszuüben.

3. Verteiler nach Anspruch 1 oder 2, **dadurch gekennzeichnet, dass** das Dichtelement (53) ortsfest in Bezug auf die Drehung um die Achse (A) ist.

4. Verteiler nach Anspruch 3, **dadurch gekennzeichnet, dass** das Dichtungselement (53) umfasst:
- einen ersten Abschnitt (80), der mit dem mindestens einen Kolben (70) in Kontakt tritt; und
- einen zweiten Abschnitt (81), in Bezug auf den der zweite Flansch (22) drehbar gleitet und der axial zwischen dem ersten Abschnitt (80) und dem zweiten Flansch (22) angeordnet ist;
wobei der zweite Abschnitt (81) vorzugsweise in PTFE hergestellt ist.

5. Verteiler nach Anspruch 3 oder 4, **dadurch gekennzeichnet, dass** das Dichtungselement (53) mindestens einen ersten ringförmigen Ring (82) umfasst;
wobei der erste ringförmige Ring (82) aus einem elastomeren Material hergestellt ist und axial zwischen dem ersten Abschnitt und dem zweiten Abschnitt (80, 81) angeordnet ist und sich um die Achse (A) erstreckt.

6. Verteiler nach Anspruch 5, **dadurch gekennzeichnet, dass**
der zweite Abschnitt (81) einen Sitz (85) definiert, der als ein Kreisbogen im Querschnitt geformt ist und zum Teil den ringförmigen Ring (82) aufnimmt.

7. Verteiler nach einem der vorhergehenden Ansprüche, **dadurch gekennzeichnet, dass** die Fluidleitung (18) einen Kanal (44) umfasst, der radial durch das Dichtungselement (53) begrenzt ist und axial vom Dichtungselement (53) und vom zweiten Flansch (21) begrenzt wird.

8. Verteiler nach Anspruch 7, **dadurch gekennzeichnet, dass** die Fluidleitung (18) umfasst:
- eine Einlassleitung (51), die fluidisch mit dem Kanal (44) verbunden ist und ausgelegt ist, damit Sperrfluid in den Kanal (44) laufen kann; und
eine Auslassleitung (52), die fluidisch mit dem Kanal (44) verbunden ist und ausgelegt ist, um Sperrfluid aus dem Kanal (44) zu bewegen;
wobei die Einlassleitung (51) und die Auslassleitung (52) im Winkel voneinander beabstandet sind;
wobei das Dichtungselement (53) axial zwischen dem Kanal (44) und der Einlassleitung (51) und Auslassleitung (52) angeordnet ist;
wobei das Dichtungselement (53) umfasst:
- ein erstes Durchgangsloch (86), das sich parallel zur Achse (A) zwischen der Einlassleitung (51) und dem Kanal (44) erstreckt; und
ein zweites Durchgangsloch (86), das sich parallel zur Achse (A) zwischen der Auslassleitung (52) und dem Kanal (44) erstreckt.

9. Verteiler nach einem der Ansprüche 6 bis 8, **dadurch gekennzeichnet, dass** das Dichtungselement (53) zwei zweite Abschnitte (81) umfasst;
wobei der erste Abschnitt (80) wiederum umfasst:
- eine erste ringförmige Oberfläche (79), die mit dem Kolben (70) in Kontakt tritt; und
- eine zweite ringförmige Oberfläche (84), die axial gegenüber der ersten ringförmigen Oberfläche (79) angeordnet ist und durch den Kanal (44) axial davon getrennt ist;
wobei die zweite ringförmige Oberfläche (84) ein Paar Sitze (85) definiert, die auf gegenüberliegenden lateralen Seiten des Kanals (44) angeordnet sind und die zugehörigen zweiten Abschnitte (81) und zugehörigen ringförmigen Ringe (82) aufnehmen;
wobei die ringförmigen Ringe (82) den Kanal (44) begrenzen.

10. Verteiler nach einem der vorhergehenden Ansprüche, **dadurch gekennzeichnet, dass** der erste Flansch (21) einen ersten Schenkel (36) definiert, dessen Hauptausdehnung parallel zur Achse (A) ist;
wobei der erste Schenkel (36) eine Nut (50) definiert, die teilweise das Dichtungselement (53) aufnimmt.

11. Verteiler nach Anspruch 10, **dadurch gekennzeichnet, dass** er ein Lager (25) zum drehbaren Abstützen des ersten Flansches (21) und des zweiten Flansches (22) in Bezug aufeinander und um die Achse (A) umfasst;
wobei das Lager (25) radial zwischen einem zweiten Schenkel (35) des ersten Flansches (21) und einem Fortsatz (49) des zweiten Flansches (22) angeordnet ist;
wobei der zweite Schenkel (35) in Bezug auf den ersten Schenkel (36) radial weiter außen ist und eine Hauptausdehnung aufweist, die parallel zur Achse (A) verläuft;
wobei der Fortsatz (49) zwischen dem ersten Schenkel (36) und dem zweiten Schenkel (35) radial angeordnet ist;
wobei das Lager (25) auf der gegenüberliegenden radialen Seite des Fortsatzes (49) in Bezug auf das Dichtungselement (53) gelagert angeordnet ist.

12. Verteiler nach einem der vorhergehenden Ansprüche, **dadurch gekennzeichnet, dass** er ein Lager (25) zum drehbaren Abstützen des ersten Flansches (21) und des zweiten Flansches (22) in Bezug aufeinander und um die Achse (A) umfasst;
wobei das Dichtungselement (53) radial zwischen dem Durchgang (23, 24) und dem Lager (25) angeordnet ist;
wobei das Lager (25) radial außen in Bezug auf das Dichtungselement (53) und den Durchgang (23, 24) angeordnet ist.

13. Verteiler nach einem der Ansprüche 5 bis 12, **dadurch gekennzeichnet, dass** er mindestens einen zweiten ringförmigen Ring (90, 91) umfasst, der radial zwischen dem ersten Abschnitt (80) und dem ersten Flansch (21) angeordnet ist;
wobei der zweite ringförmige Ring (90, 91) in einem elastomeren Material hergestellt ist.

14. Verteiler nach einem der vorhergehenden Ansprüche, **dadurch gekennzeichnet, dass** der erste Flansch (21) einen Kanal (55) definiert, der bei Verwendung fluidisch mit einer Quelle des ersten Fluids verbunden werden kann und mit dem Durchgang (23, 24) verbunden werden kann.

15. Fülleinheit (1) zum Befüllen mehrerer Artikel mit einem fließfähigen Füllprodukt, insbesondere mit einem Lebensmittelprodukt, umfassend:
- eine Verteiler (4) nach einem der vorherigen Ansprüche;
- einen Schlauch (3), der in Bezug auf die Achse (A) ortsfest ist; und
- einen Tank (2), der durch den Schlauch (3) mit dem fließfähigen Produkt befüllt werden kann;
wobei der erste Flansch (21) und der Schlauch (3) einen ersten Teil (23) des Durchgangs (23, 24) definieren;
wobei der zweite Flansch (22) und der Schlauch (3) einen zweiten Teil (24) des Durchgangs (23, 24) definieren.

## Revendications

1. Collecteur (4) destiné à une unité (1) de remplissage servant à remplir une pluralité d'articles avec un produit versable, comportant :
- une première bride (21) qui peut être fixée à un tube (3) servant à remplir un réservoir (2) avec un produit versable ;
- une deuxième bride (22) qui peut tourner autour d'un axe (A) par rapport à ladite première bride (21), peut être fixée audit réservoir (2), et définit un passage (23 ; 24) pour un premier fluide autre que ledit produit versable et prévu pour être acheminé, en cours d'utilisation, à l'intérieur dudit réservoir (2) ;
- une canalisation fluidique (18) qui est délimitée entre ladite première bride (21) et ladite deuxième bride (22) et est prévue pour être remplie d'un deuxième fluide formant barrière afin d'empêcher des agents contaminants d'atteindre ledit passage (23 ; 24) ; et
- un élément (53) d'étanchéité qui est interposé entre ladite première bride (21) et ladite deuxième bride (22) ;
**caractérisé en ce que** ledit collecteur (4) comporte en outre :
- au moins un piston (70) qui est mobile parallèlement audit axe (A) et est relié fonctionnellement audit élément (53) d'étanchéité ; et
- un circuit pneumatique (71) qui est utilisable pour exercer une pression sur un troisième fluide agissant, en cours d'utilisation, sur ledit piston (70), de façon à plaquer ledit piston (70) contre ledit élément (53) d'étanchéité suivant ledit axe (A).

2. Collecteur selon la revendication 1, **caractérisé en ce qu'**il comporte une troisième bride (75) qui est fixé à ladite première bride (21) au moins par rapport audit axe (A) ;
ledit circuit pneumatique (71) comportant lui-même une chambre (76) qui est interposée entre ledit piston (70) et ladite troisième bride (75) ;
ledit circuit pneumatique (71) pouvant être commandé pour exercer ladite pression sur ledit troisième fluide à l'intérieur de ladite chambre (76).

3. Collecteur selon la revendication 1 ou 2, **caractérisé en ce que** ledit élément (53) d'étanchéité est immobile par rapport à la rotation autour dudit axe (A).

4. Collecteur selon la revendication 3, **caractérisé en ce que** ledit élément (53) d'étanchéité comporte :
- une première partie (80) qui touche ledit ou lesdits pistons (70) ; et
- une deuxième partie (81), par rapport à laquelle ladite deuxième bride (22) coulisse de façon pivotante et qui est interposée axialement entre ladite première partie (80) et ladite deuxième bride (22) ;
ladite deuxième partie (81) étant de préférence réalisée en PTFE.

5. Collecteur selon la revendication 3 ou 4, **caractérisé en ce que** ledit élément (53) d'étanchéité comporte au moins une première bague annulaire (82) ; ladite première bague annulaire (82) étant réalisée en matériau élastomérique, étant interposée axialement entre ladite première partie et ladite deuxième partie (80, 81), et s'étendant autour dudit axe (A).

6. Collecteur selon la revendication 5, **caractérisé en ce que** ladite deuxième partie (81) définit un siège (85) qui présente la forme d'une arche circulaire en section transversale et renferme en partie ladite bague annulaire (82).

7. Collecteur selon l'une quelconque des revendications précédentes, **caractérisé en ce que** ladite canalisation fluidique (18) comporte un conduit (44) qui est délimité radialement par ledit élément (53) d'étanchéité et est délimité axialement entre ledit élément (53) d'étanchéité et ladite deuxième bride (21).

8. Collecteur selon la revendication 7, **caractérisé en ce que** ladite canalisation fluidique (18) comporte :
- un conduit (51) d'entrée qui est relié fluidiquement audit conduit (44) et est prévu pour permettre audit fluide formant barrière d'entrer dans ledit conduit (44) ; et
- un conduit (52) de sortie qui est relié fluidiquement audit conduit (44) et est prévu pour permettre audit fluide formant barrière de s'éloigner dudit conduit (44) ;
ledit conduit (51) d'entrée et ledit conduit (52) de sortie étant espacés angulairement l'un par rapport à l'autre ;
ledit élément (53) d'étanchéité étant axialement interposé entre ledit conduit (44) et ledit conduit (51) d'entrée et ledit conduit (52) de sortie ;
ledit élément (53) d'étanchéité comportant :
- un premier trou débouchant (86), qui s'étend parallèlement audit axe (A) entre ledit conduit (51) d'entrée et ledit conduit (44) ; et
- un deuxième trou débouchant (86), qui s'étend parallèlement audit axe (A) entre ledit conduit (52) de sortie et ledit conduit (44).

9. Collecteur selon l'une quelconque des revendications 6 à 8, **caractérisé en ce que** ledit élément (53) d'étanchéité comporte deux deuxièmes parties (81) ;
ladite première partie (80) comportant elle-même :
- une première surface annulaire (79) qui touche ledit piston (70) ; et
- une deuxième surface annulaire (84) qui est axialement opposée à ladite première surface annulaire (79) et est séparée axialement par ledit conduit (44) ;
ladite deuxième surface annulaire (84) définissant une paire de sièges (85), qui sont disposés sur des côtés latéraux opposés dudit conduit (44) et renferment lesdites deuxièmes parties (81) respectives et lesdites bague annulaires (82) respectives ;
lesdites bagues annulaires (82) délimitant radialement ledit conduit (44).

10. Collecteur selon l'une quelconque des revendications précédentes, **caractérisé en ce que** ladite première bride (21) définit une première branche (36) qui présente une étendue principale parallèle audit axe (A) ;
ladite première branche (36) définissant une rainure (50) qui renferme partiellement ledit élément (53) d'étanchéité.

11. Collecteur selon la revendication 10, **caractérisé en ce qu'**il comporte un roulement (25) destiné à guider en rotation ladite première bride (21) et deuxième bride (22) l'une par rapport à l'autre et autour dudit axe (A) ;
ledit roulement (25) étant interposé radialement entre une deuxième branche (35) de ladite première bride (21) et un appendice (49) de ladite deuxième bride (22) ; ladite deuxième branche (35) étant radialement extérieure par rapport à ladite première branche (36) et présentant une étendue principale parallèle audit axe (A) ;
ledit appendice (49) étant interposé radialement entre ladite première branche (36) et ladite deuxième branche (35) ;
ledit roulement (25) étant disposé du côté radial opposé dudit appendice (49) par rapport audit élément (53) d'étanchéité.

12. Collecteur selon l'une quelconque des revendications précédentes, **caractérisé en ce qu'**il comporte un roulement (25) destiné à guider en rotation ladite première bride (21) et ladite deuxième bride (22) l'une par rapport à l'autre et autour dudit axe (A) ;
ledit élément (53) d'étanchéité étant interposé radialement entre ledit passage (23, 24) et ledit roulement (25) ;
ledit roulement (25) étant disposé de façon radialement externe par rapport audit élément (53) d'étanchéité et audit passage (23, 24).

13. Collecteur selon l'une quelconque des revendications 5 à 12, **caractérisé en ce qu'**il comporte au moins une deuxième bague annulaire (90, 91) qui est interposée radialement entre ladite première partie (80) et ladite première bride (21) ;
ladite deuxième bague annulaire (90, 91) étant réalisée en matériau élastomérique.

14. Collecteur selon l'une quelconque des revendications précédentes, **caractérisé en ce que** ladite première bride (21) définit un canal (55) qui peut être relié fluidiquement, en cours d'utilisation, à une source dudit premier fluide et qui peut être relié audit passage (23, 24).

15. Unité (1) de remplissage servant à remplir une pluralité d'articles avec un produit versable de remplissage, en particulier un produit alimentaire, comportant :
- un collecteur (4) selon l'une quelconque des revendications précédentes ;
- un tube (3) qui est immobile par rapport audit axe (A) ; et
- un réservoir (2) qui peut être rempli par ledit tube (3) avec ledit produit versable ;
ladite première bride (21) et ledit tube (3) définissant une première partie (23) dudit passage (23, 24) ;
ladite deuxième bride (22) et ledit tube (3) définissant une deuxième partie (24) dudit passage (23, 24).
